# EUROPÄISCHE PATENTSCHRIFT

(11) **EP 0 451 248 B1**
(45) Veröffentlichungstag und Bekanntmachung des Hinweises auf die Patenterteilung: **23.08.1995**
(21) Anmeldenummer: 90916099.6
(22) Anmeldetag: 29.10.1990
(51) Int. Cl.: H01H 13/12, B60Q 1/38

(54) **ELEKTRISCHER DRUCKTASTENSCHALTER, INSBESONDERE WARNLICHTSCHALTER FÜR KRAFTFAHRZEUGE**
ELECTRIC PUSH-BUTTON SWITCH, IN PARTICULAR WARNING LIGHT SWITCH FOR MOTOR VEHICLES
INTERRUPTEUR A POUSSOIR ELECTRIQUE, NOTAMMENT INTERRUPTEUR D'AVERTISSEUR LUMINEUX POUR VEHICULES A MOTEUR

(30) Priorität: 02.11.1989 DE 3936380
(43) Veröffentlichungstag der Anmeldung: 16.10.1991
(73) Patentinhaber: ITT Automotive Europe GmbH, 60488 Frankfurt am Main (DE)
(72) Erfinder: NEUBAUER, Walter, D-7128 Lauffen (DE)
(86) Internationale Anmeldenummer: EP9001927
(87) Internationale Veröffentlichungsnummer: WO9106966

(56) Entgegenhaltungen:
- DE-A- 1 813 317
- DE-A- 2 458 843
- FR-A- 2 497 397

## Beschreibung

Die Erfindung geht aus von einem elektrischen Drucktastenschalter, der insbesondere als Warnlichtschalter für Kraftfahrzeuge verwendet werden soll und der die Merkmale aus dem Oberbegriff des Anspruchs 1 aufweist.

Ein Warnlichtschalter mit diesen Merkmalen ist bereits aus der DE-PS 35 44 804 bekannt. Bei diesem elektrischen Schalter besteht der Schieber im wesentlichen aus einer ersten Platte, die parallel zur Betätigungsrichtung angeordnet ist und die beweglichen elektrischen Kontakt trägt und einer zweiten Platte, die einstückig mit der ersten Platte ausgebildet ist, sich senkrecht zur Betätigungsrichtung erstreckt, in ihrer Ausdehnung weitgehend dem lichten Querschnitt der Drucktaste entspricht und an zwei gegenüberliegenden Seiten ihres Umfangs Wülste aufweist, die in Rinnen an der Innenseite der Drucktaste liegen. Durch die Wülste und Rinnen sind der Schieber und die Drucktaste fest miteinander verbunden, wobei bei der Montage der Schieber unter Aufweitung der Drucktaste in diese hineingedrückt werden muß.

Die erste Platte des Schiebers gleitet über einen Sockel, der die festen Kontakte des bekannten elektrischen Schalters trägt. Wegen der zweiten Platte des Schiebers, die das Innere der Drucktaste gegen den Sockel hin verschließt, baut der bekannte Drucktastenschalter relativ groß.

Aus der DE-OS 18 13 317 ist ein Drucktastenschalter für Fernmeldeanlagen bekannt, bei dem ein Sockel in das Innere der Drucktaste ragt, wobei Kontaktfedern in den Sockel eingefügt sind, die unterhalb des Sockels aus diesem austreten, so daß dort Leitungen angeschlossen werden können oder der gesamte Sockel in eine gedruckte Schaltung eingelötet werden kann. Aufgrund der aus dem Sockel herausgeführten Federbeine benötigt der bekannte Schalter eine erhebliche Baulänge. Soweit man von einer Montage des bekannten Schalters durch Einlöten in eine gedruckte Schaltung absieht, müssen die Anschlüsse an den Schalter über Anschlußstecker erfolgen. Der bekannte Stecker ist somit besonders geeignet für große Serien mit gleichartigen Schaltungsaufbau. Er ist dagegen weniger geeignet wenn er an unterschiedliche Schaltungsvarianten angepaßt werden soll was eine große Anzahl von nur teilweise benötigten Schaltkontakten erfordert.

Die Erfindung geht daher aus von einem Schalter der sich aus dem Oberbegriff des Anspruchs 1 ergebenden Gattung. Aufgabe der Erfindung ist es, einen insbesondere für die Autoelektrik geeigneten kurzbauenden Schalter anzugeben, dessen Gestaltung durch Anschlußleitungen vergleichsweise variabel ist. Die Kontaktstellen des Schalters, an denen die elektrischen Leitungen an die Schaltkontakte angeschlossen sind, sollen darüberhinaus noch vor mechanischen Einflüssen weitgehend geschützt sein.

Die Aufgabe wird durch die sich aus dem kennzeichnenden Teil des Anspruchs 1 ergebenden Merkmalskombination gelöst. Die Erfindung besteht im Prinzip also darin, daß die Festkontakte mit dem Sockel einstückig vereint sind, und innerhalb der Drucktaste gegenüber dem Schieber die Kontakte Anschlüsse aufweisen, zu denen (flexible) elektrische Leitungen geführt werden können. Damit müssen die Festkontakte nicht innerhalb des Sockels in Form von längs des Sockels laufenden Blechbahnen nach außen geführt werden. Da sich zumindest ein Teil der Anschlußabschnitte der Festkontakte innerhalb der Drucktaste befinden, ist so in platzsparender Weise eine Verbindung dieser Anschlußabschnitte mit dem Bordnetz eines Kraftfahrzeuges möglich.

Um die Gefahr von Kurzschlüssen zwischen den Anschlußabschnitten der Festkontakte und den an ihnen befestigten Kabeln zu vermeiden und um eine leichte Montage zu ermöglichen, sind gemäß Anspruch 2 Anschlußabschnitte der Festkontakte an wenigstens einem Seitenbereich des Sockels in einer Reihe angeordnet. Vorzugsweise befindet sich an zwei gegenüberliegenden Seitenbereichen des Sockels jeweils eine Reihe von Anschlußabschnitten der Festkontakte.

Wenn Schieber und Sockel weitgehend nebeneinander liegen, wird eine Rückstellfeder für Drucktaste und Sockel vorteilhafterweise gemäß Anspruch 3 zwischen der Drucktaste und dem Sockel und nicht zwischen dem Schieber und dem Sockel eingespannt. Insbesondere ist es günstig, die Rückstellfeder zwischen der Decke der Drucktaste und einem Widerlager am Sockel einzuspannen. Es ist günstig, wenn von der Decke der Drucktaste in deren Inneres hinein ein Führungszapfen für die als Schraubenfeder ausgebildete Rückstellfeder hochsteht. Den Führungszapfen kann man so lang machen, daß die Rückstellfeder während der Montage auf ihn aufgeschoben werden kann und dann darauf gehalten wird. Ein besonders langer Führungszapfen wird dadurch ermöglicht, daß das Widerlager hinter einer Abstützfläche der Rückstellfeder eine Aufnahme zum Eintauchen des Führungszapfens aufweist. Diese Aufnahme kann auch eine öffnung sein. Außerdem ist eine derartige Aufnahme in Verbindung mit einem langen Führungszapfen nicht nur bei einer Rückstellfeder für den Schieber und die Drucktaste eines elektrischen Drucktastenschalters von Vorteil, sondern überall dort, wo man eine lange, gute Führung für eine Schraubenfeder wünscht. Grundsätzlich kann der Führungszapfen dann so lang gemacht werden, daß die Schraubenfeder von ihm auf ihrer gesamten Länge geführt wird.

Gemäß Anspruch 6 stehen an gegenüberliegenden Rändern des Sockels von diesem sich in Betätigungsrichtung der Drucktaste erstreckende Wände ab, an der die Drucktaste mit der genannten Seitenwand zur Führung aufliegt. Die Wände sorgen außerdem dafür, daß die an den Anschlußabschnitten der Festkontakte befestigte Kabel nicht zu weit durch die Anschlulßabschnitte hindurchgesteckt werden und dann das Aufsetzen der Drucktaste auf den Sockel erschweren.

Zur Befestigung von Drucktaste und Schieber aneinander sind diese gemäß Anspruch 7 in Bewegungsrichtung über einen Vorsprung und eine Aufnahme dafür am Schieber und einer zweiten, vorzugsweise der ersten Seitenwand gegenüberliegenden Seitenwand der Drucktaste miteinander gekoppelt. Außerdem wird der Schieber durch ein zwischen ihm und der Drucktaste wirkendes Federelement gegen die zweite Seitenwand der Drucktaste gedrückt, wodurch Vorsprung und Aufnahme in Eingriff miteinander bleiben. Drucktaste und Schieber können dann leicht vormontiert werden, ohne sich wieder voneinander zu lösen. Andererseits ist es möglich, Schieber und Drucktaste von Hand auf einfache Weise dadurch voneinander zu lösen, daß der Schieber als Ganzes etwas gegen das Federelement bewegt wird, so daß der Vorsprung aus der Aufnahme gelangt.

Bevorzugt wird eine Ausführung gemäß Anspruch 8, wonach das Federelement ein Ausleger ist, der einstückig an die Decke der Drucktaste angeformt ist, sich in das Innere der Drucktaste hineinerstreckt und den Schieber untergreift.

Damit der Ausleger sofort an die richtige Stelle unter dem Schieber gelangt, reicht dieser in einer Richtung senkrecht zur Betätigungsrichtung und parallel zur zweiten Seitenwand der Drucktaste bis zu zwei weiteren Seitenwänden der Drucktaste heran. Vorzugsweise reicht der Schieber nur mit schmalen Leisten unmittelbar an der zweiten Seitenwand der Drucktaste bis zu den zwei weiteren Seitenwänden heran. Zwei Wände des Sockels stehen beidseits des Schiebers bis zu den Leisten hoch, so daß eine gute Führung von Drucktaste und Schieber am Sockel erreicht wird.

Ein Ausführungsbeispiel eines erfindungsgemäßen elektrischen Drucktastenschalters ist in den Zeichnungen dargestellt. Anhand der Figuren dieser Zeichnungen wird die Erfindung nun näher erläutert.

Es zeigen:

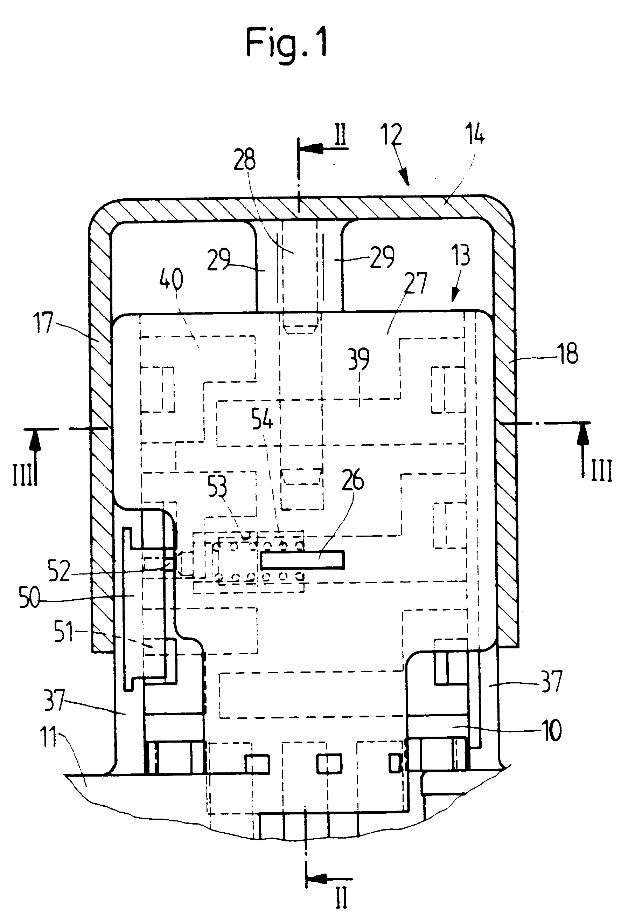

- Fig. 1: mit aufgeschnittener Drucktaste eine Draufsicht auf die dem Sockel abgekehrte Oberseite des Schiebers,
- Fig. 2: einen Schnitt entlang der Linie II-II aus Fig. 1,
- Fig. 3: einen Schnitt entlang der Linie III-III aus Fig. 1 und
- Fig. 4: eine Draufsicht auf die Rastkurve für Schieber und Drucktaste.

Der dargestellte elektrische Drucktastenschalter weist einen Sockel 10 auf, der unmittelbar an die Grundplatte 11 eines nicht näher dargestellten Lenkstockschalters angeformt ist. Gegenüber dem Sockel 10 sind eine kappenartige Drucktaste 12 und ein Schieber 13 linear betätigbar. Und zwar haben Drucktaste 12 und Schieber 13 gegenüber dem Sockel 10 zwei stabile Schaltstellungen, zwischen denen durch Niederdrücken der Drucktaste 12 gewechselt werden kann.

Die kappenartige Drucktaste 12 ist aus einer Decke 14 und vier Seitenwänden 15 bis 18 aufgebaut, die senkrecht auf der Decke 14 stehen und von denen jeweils zwei parallel zueinander verlaufen. Der Schieber wird auf einer großen Länge von der Drucktaste 12 aufgenommen, ist an dieser mit Abstand zur ersten Seitenwand 15 gehalten und liegt an der parallel zur ersten Seitenwand verlaufenden zweiten Seitenwand 16 an. Und zwar wird der Schieber 13 an der Drucktaste 12 unabhängig von dem Sockel 10 gehalten, so daß eine Vormontage von Drucktaste und Schieber aneinander möglich ist. Zur Kopplung der Drucktaste 12 mit dem Schieber 13 in Betätigungsrichtung dienen ein rippenartiger Vorsprung 25 an der Innenseite der zweiten Seitenwand 16 und eine entsprechende Aufnahme 26 an der Oberseite 27 des Schiebers 13. In Betätigungsrichtung entspricht die Breite der Aufnahme 26 annähernd der Breite des Vorsprungs 25, so daß dieser zwar leicht in die Aufnahme 26 eingreifen kann, Schieber und Drucktaste jedoch in Betätigungsrichtung weitgehend spielfrei miteinander gekoppelt sind. Die Oberseite 27 des Schiebers 13 wird an die Seitenwand 16 der Drucktaste 12 von einem federnden Ausleger 28 gedrückt, der mittig zwischen den zwei weiteren Seitenwänden 17 und 18 der Drucktaste 12 innen einstückig an deren Decke 14 angeformt ist, sich in Betätigungsrichtung in das Innere der Drucktaste 12 hineinerstreckt und den Schieber 13 untergreift. Im Abstand zur Decke 14 ist der Ausleger 28 ein Zapfen, während er in der Nähe der Decke 14 durch zwei seitliche Flügel 29 verstärkt ist. Damit der Abstand des Schiebers 13 vom Sockel 10 gering sein kann, befindet sich der Ausleger 28 in einer Aussparung 30 des Schiebers 13, die zur Decke 14 und zum Sockel 10 hin offen ist, so daß sie leicht entformt werden kann. Ein Abstand des Auslegers 28 von der Seitenwand 16 der Drucktaste 12 ermöglicht es, dort die Aussparung 30 durch eine Wand 31 des Schiebers 13 zu verschließen, an der der Ausleger 28 anliegt und über die er den Schieber 13 an die Seitenwand 16 der Drucktaste 12 drückt.

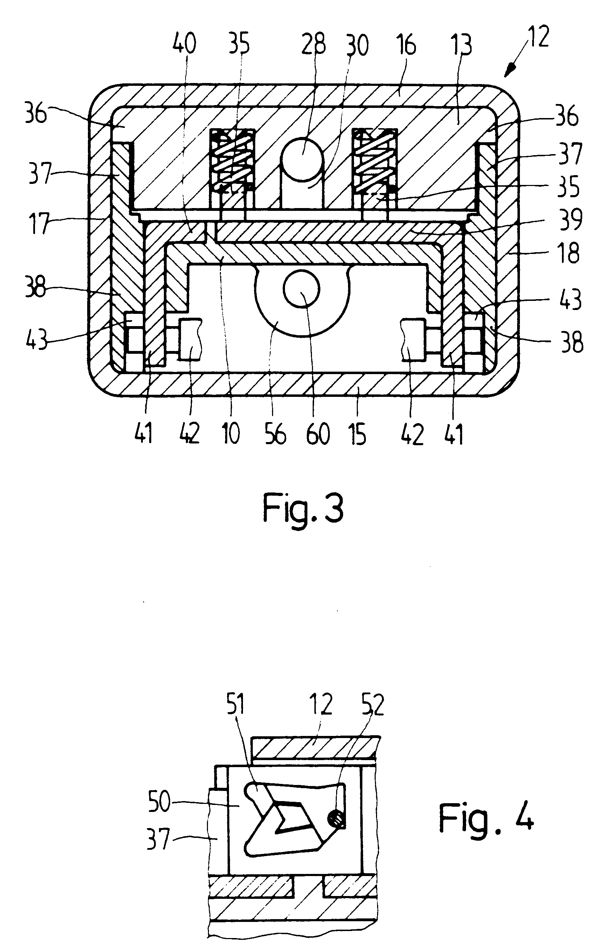

Dadurch, daß sich der Ausleger 28 in Betätigungsrichtung erstreckt und senkrecht dazu relativ schmal ist, ist es möglich, zu beiden Seiten von ihm noch Kontaktbrücken 35 im Schieber 13 anzuordnen, die sich mit ihrer Längsrichtung ebenfalls in Betätigungsrichtung erstrecken. Man sieht deutlich aus Fig. 3, daß der Ausleger gerade den Platz für eine Kontaktbrücke benötigt, ansonsten die Unterbringung von Kontaktbrücken im Schieber 13 jedoch nicht stört.

Bei der Vormontage des Schiebers 13 und der Drucktaste 12 aneinander wird der Schieber in leicht von der Seitenwand 16 weggekippter Stellung mit der Wand 31 zwischen dem Vorsprung 25 und dem Ausleger 28 in die Drucktaste 12 hineingeschoben. Dabei federt der Ausleger 28 aus, bis schließlich der Vorsprung 25 in die Aufnahme 26 einschnappen kann. Vorsprung 25 und Aufnahme 26 befinden sich im Abstand vor dem freien Ende des Auslegers 28, so daß dessen Federweg nur klein ist. Man könnte die Einführbarkeit des Schiebers 13 in die Drucktaste 12 noch durch längere Anlaufschrägen an der Wand 31 oder dem Ausleger 28 erleichtern. Jedoch wird dadurch die Länge, auf der der Ausleger 28 am Schieber 13 und dieser an der Seitenwand 16 anliegt, verkürzt und dadurch der Halt von Schieber 13 und Drucktaste 12 aneinander verschlechtert.

Der Ausleger 28 ist kürzer als die Drucktaste 12, so daß das Einfädeln des Auslegers 28 in die Aussparung 30 optisch nicht gut verfolgt werden kann. Damit der Ausleger jedoch ohne weiteres in die Aussparung gelangt, besitzt der Schieber 13 unmittelbar an der zweiten Seitenwand 16 der Drucktaste 12 zwei schmale Leisten 36, mit denen er bis zu den zwei weiteren Seitenwänden 17 und 18 der Drucktaste 12 reicht. Die Leisten 36 beginnen an dem der Decke 14 der Drucktaste 12 zugekehrten Ende des Schiebers 13 und erstrecken sich über eine bestimmte Länge von diesem Ende weg. Sie machen es notwendig, den Schieber 13 genau in einer solchen Lage in die Drucktaste 12 einzuschieben, daß der Ausleger 28 von selbst in die Aussparung 30 gelangt.

In dem freien Raum zwischen dem Schieber 13 und der ersten Seitenwand 15 der Drucktaste 12 befindet sich der Sockel 10. In der niedergedrückten Schaltstellung reicht er bis nahe an die Decke 14 der Drucktaste 12 heran. Er ist eine weitgehend eben Platte, an deren in Betätigungsrichtung verlaufenden Seiten in entgegengesetzte Richtungen Wände 37 und 38 hochstehen. Die Wände 37 befinden sich seitlich des Schiebers 13 und reichen bis zu dessen Leisten 36. Die Wände 38 stehen zur Seitenwand 15 der Drucktaste 12 hin ab und reichen bis zu dieser hinab. Die Wände 37 und 38 sorgen für eine verkippungsfreie Führung der Drucktaste 12 und des Schiebers 13 am Sockel 10.

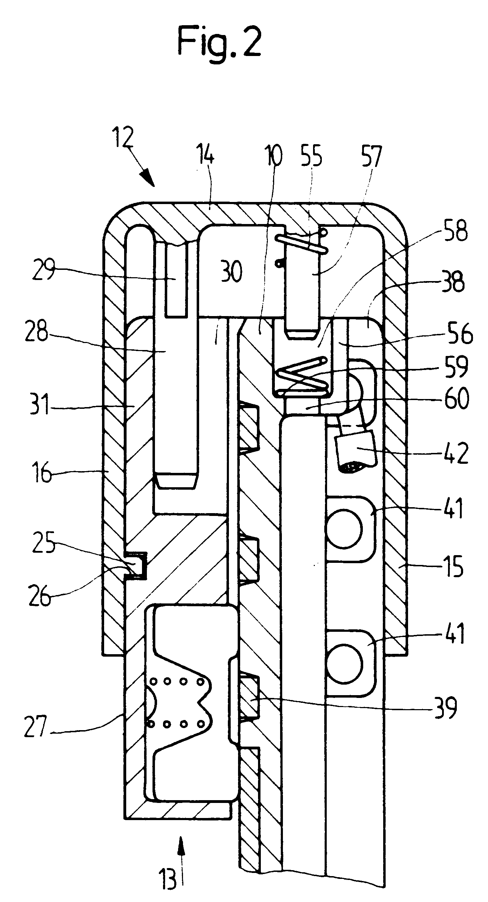

Der Sockel 10 trägt verschiedene Festkontakte 39 und 40, die aus einem Blech ausgestanzt und in eine rechtwinklige Form gebogen sind. Die Festkontakte besitzen Anschlußabschnitte 41, mit denen sie den Sockel 10 durchdringen und die innen an den Wänden 38 des Sockels 10 in zwei Reihen angeordnet sind, die sich in Betätigungsrichtung erstrecken. An den Anschlußabschnitten 41 sind Kabel 42 befestigt, die von innen durch die Anschlußabschnitte 41 hindurchgesteckt und festgeklemmt sind. In den Wänden 38 befinden sich Taschen 43, die es einerseits ermöglichen, die Kabel 42 weit genug in die Anschlußabschnitte 41 hineinzustecken, die andererseits aber auch den Einschiebeweg begrenzen. Wie man aus Fig. 2 ersieht, in die der Klarheit halber nur ein Kabel 42 eingezeichnet ist, befinden sich wenigstens einige der Anschlußabschnitte 41 ganz innerhalb der Drucktaste 12. Die Kabel 42 verlaufen also innerhalb der Drucktaste 12 in dem Raum zwischen deren ersten Seitenwand 15 und dem Sockel 10. Durch den weiten Abstand der beiden Reihen von Anschlußabschnitten 41 voneinander ist sichergestellt, daß keine Kurzschlüsse auftreten.

In eine Seitenwand 37 des Sockels 10 ist ein Kunststoffteil 50 mit einer allgemein bekannten Herzkurve 51 eingesetzt, in der ein Stift 52 umlaufen kann, der in einer quer zur Betätigungsrichtung verlaufenden Bohrung 53 des Schiebers 13 geführt ist und von einer sich in der Bohrung befindlichen Druckfeder 54 in die Herzkurve 51 hingedrückt wird.

Zwischen der Decke 14 der Drucktaste 12 und dem Sockel 10 ist eine Rückstellfeder 55 eingespannt. Am Sockel stützt sie sich an einem Widerlager 56 ab, das in Richtung auf die Seitenwand 15 der Drucktaste 12 vom Sockel 10 absteht. Geführt ist die Rückstellfeder 55 durch einen Zapfen 57, der an die Decke 14 der Drucktaste 12 angeformt ist und den die Rückstellfeder 55 umgibt, und in einer Bohrung 58 des Widerlagers 56. Die Bohrung besitzt eine Schulter 59 als Abstützung für die Rückstellfeder 55. Im Boden der Bohrung 58 befindet sich ein Loch 60, in das der Führungszapfen 57 eintauchen kann. Dieser kann deshalb besonders lang sein. Im Grunde kann er schon in der in Fig. 2 gezeigten Stellung der Drucktaste 12 in das Loch 60 hineinragen und somit die Feder 55 auf ihrer gesamten Länge führen.

In den Figuren ist der Drucktastenschalter in einer Ausschaltstellung gezeigt, in der der Stift 52 in einer ersten Mulde der Herzkurve 51 liegt und verhindert, daß die Rückstellfeder 55 Schieber und Drucktaste vom Sockel 10 entfernt. Wird nun die Drucktaste 12 niedergedrückt, so läuft der Stift 52 die Herzkurve 51 entlang und gerät beim Loslassen der Drucktaste in eine zweite Mulde der Herzkurve 51, wobei die Drucktaste 12 und der Schieber 13 von der Feder 55 schon etwas zurückgestellt werden. Nach abermaligem Niederdrücken der Drucktaste 12 wird der Stift 52 wieder frei und kehrt unter der Wirkung der Rückstellfeder 55 in seine Ausgangslage zurück.

## Patentansprüche

1. Elektrischer Drucktastenschalter, insbesondere Warnlichtschalter für Kraftfahrzeuge, mit einem Sockel (10) mit Festkontakten (39, 40), mit einer kappenartigen, linear betätigbaren Drucktaste (12) und mit einem Schieber (13), der sich zumindest teilweise innerhalb der Drucktaste (12) befindet und in Bewegungsrichtung der Drucktaste (12) zusammen mit dieser bewegbar ist, wobei der Schieber (13) in einem Abstand zu einer ersten Seitenwand (15) der Drucktaste (12) an dieser gehalten ist und der Sockel (10) in die Drucktaste (12) hineinragt und sich dort im wesentlichen zwischen dem Schieber (13) und der ersten Seitenwand (15) der Drucktaste (12) befindet,
dadurch gekennzeichnet, daß die Festkontakte (39, 40) den Sockel (10) durchdringen und auf der dem Schieber (13) gegenüberliegenden Seite mit Anschlußabschnitten (41) versehen sind, daß sich der Anschlußabschnitt (41) wenigstens eines der Festkontakte (39, 40) innerhalb der Drucktaste (12) befindet und daß an diesem Anschlußabschnitt (41) eine elektrische Leitung (42) befestigt ist, die zwischen dem Sockel (10) und der ersten Seitenwand (15) der Drucktaste (12) verläuft.

2. Elektrischer Drucktastenschalter nach Anspruch 1, dadurch gekennzeichnet, daß Anschlußabschnitte (41) von Festkontakten (39, 40) an wenigstens einem Seitenbereich des Sockels (10) in einer Reihe angeordnet sind.

3. Elektrischer Drucktastenschalter nach einem der Ansprüche 1 oder 2, dadurch gekennzeichnet, daß eine Rückstellfeder (55) zwischen der Drucktaste (12) und dem Sockel (10) eingespannt ist.

4. Elektrischer Drucktastenschalter nach Anspruch 3, dadurch gekennzeichnet, daß die Rückstellfeder (55) zwischen der Decke (14) der Drucktaste (12) und einem Widerlager (56) am Sockel (10) eingespannt ist.

5. Elektrischer Drucktastenschalter nach Anspruch 4, dadurch gekennzeichnet, daß von der Decke (14) der Drucktaste (12) in deren Inneres hinein ein Führungszapfen (57) für die als Schraubenfeder ausgebildete Rückstellfeder (55) hochsteht und daß das Widerlager (56) hinter einer Abstützfläche (59) für die Rückstellfeder (55) eine Aufnahme (60) zum Eintauchen des Führungszapfens (57) aufweist.

6. Elektrischer Drucktastenschalter nach einem vorhergehenden Anspruch, dadurch gekennzeichnet, daß die Drucktaste (12) mit der ersten Seitenwand (15) auf an gegenüberliegenden Rändern des Sockels (10) von diesem abstehenden, sich in Betätigungsrichtung erstreckenden Wänden (38) aufliegt.

7. Elektrischer Drucktastenschalter nach einem vorhergehenden Anspruch, dadurch gekennzeichnet, daß der Schieber (13) und die Drucktaste (12) in Bewegungsrichtung über einen Vorsprung (25) und eine Aufnahme (26) dafür am Schieber (13) und an einer zweiten, vorzugsweise der ersten Seitenwand (15) gegenüberliegenden Seitenwand (16) der Drucktaste (12) miteinander gekoppelt sind und daß der Schieber (13) durch ein zwischen ihm und der Drucktaste (12) wirkendes Federelement (28) gegen die zweite Seitenwand (16) der Drucktaste (12) gedrückt wird.

8. Elektrischer Drucktastenschalter nach Anspruch 7, dadurch gekennzeichnet, daß das Federelement (28) ein Ausleger ist, der einstückig vorzugsweise an die Decke (14) der Drucktaste (12) angeformt ist, sich in das Innere der Drucktaste (12) hineinerstreckt und den Schieber (13) untergreift.

9. Elektrischer Drucktastenschalter nach 8, dadurch gekennzeichnet, daß sich Vorsprung (25) und Aufnahme (26) vor dem freien Ende des Auslegers (28) befinden.

10. Elektrischer Drucktastenschalter nach Anspruch 8 oder 9, dadurch gekennzeichnet, daß wenigstens eine vom Schieber (13) mitgenommene Kontaktbrücke (35) längs der Bewegungsrichtung von Drucktaste (12) und Schieber (13) angeordnet ist und daß sich der Ausleger (28) neben einer Kontaktbrücke (35) bzw. zwischen zwei Kontaktbrücken (35) befindet.

11. Elektrischer Drucktastenschalter nach Anspruch 8, 9 oder 10, dadurch gekennzeichnet, daß sich der Ausleger (28) in einer zur Decke (14) und vorzugsweise auch zum Sockel (10) hin offenen Aussparung (30) des Schiebers (13) befindet.

12. Elektrischer Drucktastenschalter nach einem der Ansprüche 8 bis 11, dadurch gekennzeichnet, daß der Ausleger (28) wenigstens zu seinem freien Ende hin ein Zapfen ist.

13. Elektrischer Drucktastenschalter nach einem der Ansprüche 7 bis 12, dadurch gekennzeichnet, daß der Schieber (13) in einer Richtung senkrecht zur Bewegungsrichtung und parallel zur zweiten Seitenwand (16) der Drucktaste (12) bis zu zwei weiteren Seitenwänden (17, 18) der Drucktaste (12) reicht.

14. Elektrischer Drucktastenschalter nach Anspruch 13, dadurch gekennzeichnet, daß der Ausleger (28) kürzer ist als die Drucktaste (12) und daß der Schieber (13) zumindest auf einer bestimmten Strecke von seiner der Decke (14) der Drucktaste (12) zugewandten Stirnseite her bis zu den beiden Seitenwänden (17, 18) reicht.

15. Elektrischer Drucktastenschalter nach Anspruch 13 oder 14, dadurch gekennzeichnet, daß der Schieber (13) mit schmalen Leisten (36) unmittelbar an der zweiten Seitenwand (16) der Drucktaste (12) bis zu den zwei weiteren Seitenwänden (17, 18) reicht und daß zwei Wände (37) des Sockels (10) beidseits des Schiebers (13) bis zu den Leisten (36) hochstehen.

## Claims

1. An electric push button switch, especially a hazard-warning signal switch for motor vehicles, including a socket (10) with stationary contacts (39, 40), a cap-like linearly actuatable push button (12) and a slide (13), which is positioned at least partly inside the push button (12) and is movable in the direction of motion of the push button (12) together with the push button (12), the slide (13) being held on the push button (12) spaced from a first side wall (15) of the push button (12), and the socket projecting into the push button (12) and being there substantially located between the slide (13) and the first side wall (15) of the push button (12),
**characterized** in that the stationary contacts (39, 40) penetrate the socket (10) and are provided with terminal sections (41) on the side opposite the slide (13), in that the terminal section (41) of at least one of the stationary contacts (39, 40) is located inside the push button (12), and in that an electric line (42) is fixed onto this terminal section (41) and extends between the socket (10) and the first side walls (15) of the push button (12).

2. An electric push button switch as claimed in claim 1,
**characterized** in that terminal sections (41) of stationary contacts (39, 40) are arranged in a row on at least one side area of the socket (10).

3. An electric push button switch as claimed in any one of the claims 1 or 2,
**characterized** in that a reset spring (55) is compressed between the push button (12) and the socket (10).

4. An electric push button switch as claimed in claim 3,
**characterized** in that the reset spring (55) is compressed between the top (14) of the push button (12) and an abutment (56) on the socket (10).

5. An electric push button switch as claimed in claim 4,
**characterized** in that a guide pin (57) for the reset spring (55) formed as a helical spring extends from the top (14) of the push button (12) into the interior of the push button (12), and in that the abutment (56) behind a supporting area (59) for the reset spring (55) includes a receiver opening (60) for engaging the guide pin (57).

6. An electric push button switch as claimed in any one of the preceding claims,
**characterized** in that the first side wall (15) of the push button (12) bears against walls (38) on opposite borders of the socket (10), which walls extend from the socket (10) towards the direction of actuation.

7. An electric push button switch as claimed in any one of the preceding claims,
**characterized** in that the slide (13) and the push button (12) in the direction of motion are coupled to each other via a projection (25) and a receiver opening (26) on the slide (13) and a second side wall (16) of the push button (12), preferably opposite the first side wall (15), and in that the slide (13) is pushed against the second side wall (16) of the push button (12) by a resilient element (28) acting between the slide and push button (12).

8. An electric push button switch as claimed in claim 7,
**characterized** in that the resilient element (28) is an extension element which is integrally formed, preferably, onto the top (14) of the push button (12), which projects into the interior of the push button (12) and engages under the slide (13).

9. An electric push button switch as claimed in claim 8,
**characterized** in that the projection (25) and the receiver opening (26) are positioned in front of the free end of the extension element (28).

10. An electric push button switch as claimed in claim 8 or 9,
**characterized** in that at least one bridging contact (35) taken along by the slide (13) is arranged in the direction of motion of the push button (12) and the slide (13), and in that the extension element (28) is situated beside a bridging contat (35) or between two bridging contacts (35).

11. An electric push button switch as claimed in claim 8, 9 or 10,
**characterized** in that the extension element (28) is located in a recess (30) of the slide (13), which recess (38) is open towards the top (14) and is preferably open also towards the socket (10).

12. An electric push button switch as claimed in any one of the claims 8 to 11,
**characterized** in that the extension element (28) is a pin at least towards its free end.

13. An electric push button switch as claimed in any one of the claims 7 to 12,
**characterized** in that, in a direction perpendicular to the direction of motion and in parallel to the second side wall (16) of the push button (12), the slide (13) extends up to two further side walls (17, 18) of the push button (12).

14. An electric push button switch as claimed in claim 13,
**characterized** in that the extension element (28) is shorter than the push button (12), and in that the slide (13) extends, at least for a certain distance, from its front side facing the top (14) of the push button (12) up to the two side walls (17, 18).

15. An electric push button switch as claimed in claim 13 or 14,
**characterized** in that the slide (13) with narrow strips (36) directly on the second side wall (16) of the push button (12) extends up to the two further side walls (17, 18), and in that two walls (37) of the socket (10) on both sides of the slide (13) extend up to the strips (36).

## Revendications

1. Interrupteur électrique à bouton-poussoir, notamment interrupteur de feux de détresse pour véhicule automobile, comprenant une base (10) comportant des contacts fixes (39, 40), un bouton-poussoir (12) en forme de capuchon et agencé de façon à pouvoir être actionné d'une manière rectiligne et un coulisseau (13) qui est situé au moins en partie à l'intérieur du bouton-poussoir (12) et est agencé de façon à pouvoir être déplacé en commun avec le bouton-poussoir (12) suivant la direction d'actionnement de ce bouton-poussoir, tandis que le coulisseau (13) est maintenu en appui sur le bouton-poussoir (12) à distance d'une premère paroi latérale (15) de ce bouton-poussoir et que la base (10) fait saillie dans le bouton-poussoir (12) et est située dans ce bouton-poussoir essentiellement entre le coulisseau (13) et la premère paroi latérale (15) du bouton-poussoir (12), caractérisé en ce que les contacts fixes (39, 40) traversent la base (10) et comportent, du côté opposé au coulisseau (13), des sections (41) qui servent de bornes, en ce que la section (41) servant de borne d'au moins l'un des contacts fixes (39, 40) est située à l'intérieur du bouton-poussoir (12) et en ce qu'un conducteur électrique (42), qui s'étend entre la base (10) et la première paroi latérale (15) du bouton-poussoir (12), est fixé à cette section (41) servant de borne.

2. Interrupteur électrique à bouton-poussoir selon la revendication 1, caractérisé en ce que des sections (41) de contacts fixes (39, 40) qui servent de bornes sont disposées suivant une rangée sur au moins une zone latérale de la base (10).

3. Interrupteur électrique à bouton-poussoir selon l'une des revendications 1 et 2, caractérisé en ce qu'un ressort de rappel (55) est placé sous contrainte entre le bouton-poussoir (12) et la base (10).

4. Interrupteur électrique à bouton-poussoir selon la revendication 3, caractérisé en ce que le ressort de rappel (55) est placé sous contrainte entre le fond (14) du bouton-poussoir (12) et un appui complémentaire (56) situé sur la base (10).

5. Interrupteur électrique à bouton-poussoir selon la revendication 4, caractérisé en ce qu'un doigt (57) de guidage du ressort de rappel (55), qui est réalisé sous la forme d'un ressort hélicoïdal, se dresse sur le fond (14) du bouton-poussoir (12) dans la cavité de ce bouton-poussoir et en ce que l'appui complémentaire (56) comporte, derrière une surface (59) d'appui du ressort de rappel (55), un logement (60) dans lequel le doigt de guidage (57) peut s'enfoncer.

6. Interrupteur électrique à bouton-poussoir selon une revendication précédente, caractérisé en ce que le bouton-poussoir (12) prend appui, par la première paroi latérale (15), sur des parois (38) qui se dressent sur la base (10) sur des bords opposés de cette base et s'étendent suivant la direction d'actionnement.

7. Interrupteur électrique à bouton-poussoir selon une revendication précédente, caractérisé en ce que le coulisseau (13) et le bouton-poussoir (12) sont accouplés entre eux suivant la direction d'actionnement au moyen d'une partie en saillie (25) et d'un logement (26) qui sont prévus à cet effet sur le coulisseau (13) et sur une seconde paroi latérale (16) du bouton-poussoir (12) qui est de préférence située à l'opposé de la première paroi latérale (15) et en ce que le coulisseau (13) est appliqué en appui contre la seconde paroi latérale (16) du bouton-poussoir (12) au moyen d'un élément à action élastique (28) agissant entre ce coulisseau et le bouton-poussoir (12).

8. Interrupteur électrique à bouton-poussoir selon la revendication 7, caractérisé en ce que l'élément à action élastique (28) est un élément en porte-à-faux qui est venu de matière au formage, de préférence sur le fond (14) du bouton-poussoir (12), et qui s'étend à l'intérieur du bouton-poussoir (12) et vient en prise derrière le coulisseau (13).

9. Interrupteur électrique à bouton-poussoir selon la revendication 8, caractérisé en ce que la partie en saillie (25) et le logement (26) sont situés en avant de l'extrémité libre de l'élément en porte-à-faux (28).

10. Interrupteur électrique à bouton-poussoir selon la revendication 8 ou 9, caractérisé en ce qu'au moins un pont de contact (35), entraîné par le coulisseau (13), est disposé le long de la direction d'actionnement du bouton-poussoir (12) et du coulisseau (13) et en ce que l'élément en porte-à-faux (28) est situé à côté d'un pont de contact (35) ou entre deux ponts de contact (35).

11. Interrupteur électrique à bouton-poussoir selon la revendication 8, 9 ou 10, caractérisé en ce que l'élément en porte-à-faux (28) est situé dans un évidement (30) du coulisseau (13) qui est ouvert vers le fond (14) et de préférence aussi vers la base (10).

12. Interrupteur électrique à bouton-poussoir selon l'une des revendications 8 à 11, caractérisé en ce que l'élément en porte-à-faux (28) est formé d'un doigt, au moins à son extrémité libre.

13. Interrupteur électrique à bouton-poussoir selon l'une des revendications 7 à 12, caractérisé en ce que le coulisseau (13) s'étend, suivant une direction perpendiculaire à la direction d'actionnement et parallèle à la seconde paroi latérale (16) du bouton-poussoir (12), jusqu'à deux autres parois latérales (17,18) du bouton-poussoir (12).

14. Interrupteur électrique à bouton-poussoir selon la revendication 13, caractérisé en ce que l'élément en porte-à-faux (28) est plus court que le bouton-poussoir (12) et en ce qu'au moins sur une distance déterminée à partir de la face frontale du coulisseau (13) qui est tournée vers le fond (14) du bouton-poussoir (12), ce coulisseau (13) s'étend jusqu'aux deux parois latérales (17,18).

15. Interrupteur électrique à bouton-poussoir selon la revendication 13 ou 14, caractérisé en ce que le coulisseau (13) s'étend, par de petites nervures (36) et directement à l'endroit de la seconde paroi latérale (16) du bouton-poussoir (12), jusqu'aux deux autres parois latérales (17, 18) et en ce que deux parois (37) de la base (10) se dressent, de part et d'autre du coulisseau (13), jusqu'aux nervures (36).
